Europäisches Patentamt

European Patent Office

Office européen des brevets

(11) Numéro de publication: **0 424 284 A1**

# (12) DEMANDE DE BREVET EUROPEEN

(21) Numéro de dépôt: 90420439.3

(22) Date de dépôt: 11.10.90

(51) Int. Cl.⁵: **B62K 25/08**

(30) Priorité: **18.10.89 FR 8913947**

(43) Date de publication de la demande:
**24.04.91 Bulletin 91/17**

(84) Etats contractants désignés:
**DE FR GB IT**

(71) Demandeur: **Guyenard, Jean-Marc**
**11, rue des Pinsons**
**F-74000 Cran Gevrier(FR)**

(72) Inventeur: **Guyenard, Jean-Marc**
**11, rue des Pinsons**
**F-74000 Cran Gevrier(FR)**

(74) Mandataire: **de Beaumont, Michel**
**Cabinet Poncet 7, chemin de Tillier B.P. 317**
**F-74008 Annecy RP Cédex(FR)**

(54) **Dispositif de réglage de pression pour fourche de motocyclette.**

(57) Le dispositif de l'invention comprend un corps (27) muni de moyens de fixation à un guidon (18) de motocyclette. Le corps (27) comprend une membrane élastiquement déformable dont une partie centrale (29) peut être actionnée par l'utilisateur pour chasser l'air qu'elle contient et l'introduire dans la fourche (21) d'une motocyclette par l'intermédiaire d'une canalisation (19) et de clapets antiretour prévus dans le corps (27). Un clapet de décharge (58) autorise la sortie d'air vers l'atmosphère. Un manomètre (28) mesure la pression d'air dans la fourche.

Fig.2

# DISPOSITIF DE REGLAGE DE PRESSION POUR FOURCHE DE MOTOCYCLETTE

La présente invention concerne les suspensions de type fourche téléscopique telles que celles utilisées pour la fixation de roues avant de motocyclettes. L'invention s'applique en particulier aux motocyclettes traditionnelles à deux roues et moteur, mais aussi aux bicyclettes et vélos tous terrains. Dans la description qui suit, et dans les revendications, le terme "motocyclette" désigne tout véhicule à deux, trois ou quatre roues ayant une fixation de roue de type fourche téléscopique telle que celle d'une roue avant de motocyclette, et cela indépendamment de la présence ou de l'absence d'un moteur.

Une telle fourche téléscopique de motocyclette, par exemple la fourche décrite dans le document EP-A-0173020, comprend deux tubes téléscopiques disposés de part et d'autre de la roue, chaque tube étant muni de moyens élastiques et de moyens amortisseurs. Dans la structure de fourche la plus couramment utilisée, la force de sustentation est produite par un ressort principal de compression. L'amortissement est assuré par un passage d'huile de part et d'autre d'un piston coulissant dans un tube, l'huile traversant des orifices de dimensions appropriées éventuellement munis de clapets. Une chambre de compression contenant de l'air est prévue au-dessus de l'huile.

Lors du fonctionnement de la suspension, la charge de la motocyclette comprime légèrement la suspension. Au repos, lorsque la motocyclette est à l'arrêt, la raideur du ressort principal détermine l'écrasement moyen de la suspension, et l'air contenu dans la chambre correspondante n'a qu'un effet correcteur secondaire sur la force de sustentation. Par contre, lorsque, sous l'effet d'une impulsion ou d'une charge plus importante, la suspension approche de sa limite d'écrasement, l'air contenu dans la chambre correspondante participe de façon prédominante, avec le ressort principal de compression, à l'obtention de la force de sustentation de la suspension. La force de sustentation produite par l'air comprimé de la chambre est hyperbolique. Elle double lorsque le volume est réduit de moitié.

L'air contenu dans la chambre agit alors comme une butée élastique, limitant le raccourcissement de la fourche et évitant les chocs entre le piston et le fond de son tube. L'obtention de l'effet de butée élastique nécessite que la chambre de compression soit étanche, et que son volume ne soit qu'une fraction du volume total de la fourche. La raideur obtenue pendant les phases de compression de la suspension dépend de la pression de l'air contenu dans la chambre, laquelle pression dépendant de divers paramètres et notamment de la pression initiale de l'air lorsque la suspension est au repos, et de la température de l'air pendant le fonctionnement. Les chocs encaissés par les suspensions provoquent généralement un échauffement de l'air, entraînant une augmentation de sa pression et un raffermissement de la suspension. Des conditions météorologiques différentes, provoquant des températures différentes, induisent également une modification sensible des réactions de la suspension.

On peut généralement régler en atelier la pression initiale de l'air contenu dans la suspension, au moyen d'air comprimé et de manomètres utilisés pour le gonflage des pneus. Toutefois, cette technique ne permet pas un réglage précis de la pression d'air, car le volume très réduit des chambres contenant de l'air dans les fourches et les pressions de gonflage relativement faibles rendent ce réglage quasi impossible avec les moyens traditionnels.

De plus, lorsqu'une pression correcte a malgré tout pu être obtenue lorsque la suspension est au repos, aucun moyen n'est prévu sur les motocyclettes traditionnelles pour le réglage de cette pression en cours de fonctionnement.

Le brevet américain US-A-4 153 266 décrit une structure de fourche de motocyclette dans laquelle la force de sustentation est produite par un piston repoussé par de l'air contenu dans le tube de fourche. Le dispositif ne comporte pas de ressort. L'espace intérieur du tube de fourche est connecté à un réservoir extérieur muni d'une pompe. La pompe permet de régler la pression de l'air régnant à l'intérieur de la fourche et dans le réservoir. Il s'agit donc d'une suspension pneumatique, dans laquelle le volume d'air comprimé lors de la compression de la fourche est supérieur au volume de la fourche, puisque l'air comprimé est contenu non seulement dans la fourche mais également dans le réservoir. Il en résulte que l'adaptation du réservoir de la pompe sur la fourche entraîne, dans ce dispositif, la suppression de tout effet de butée élastique de fin de course. Les réactions d'une telle suspension sont très différentes de celles des suspensions habituelles à ressort et volume d'air emprisonné dans le tube.

En outre, dans ce dispositif du brevet américain, les organes externes tels que la pompe, le réservoir et divers autres accessoires sont fixés à l'écrou de colonne de direction, et augmentent sensiblement l'encombrement de l'ensemble. Ce dispositif n'est pas adaptable à toutes les motocyclettes, et n'est pas facilement logeable sur un guidon.

La présente invention a notamment pour objet de prévoir un dispositif approprié compact et de faible encombrement, permettant un réglage rapide et précis de l'effet de butée élastique de l'air, par réglage de la pression d'air contenu dans les suspensions à ressort de motocyclette, le dispositif étant adapté au volume faible et à la pression d'air à contrôler. Selon l'invention, le réglage de pression est obtenu sans augmentation sensible du volume d'air, et donc sans perturber ou supprimer, l'effet de butée élastique produit par l'air.

L'invention a également pour objet de fournir, par le même dispositif compact et de faible encombrement, une indication de la pression d'air contenu dans la suspension, pour permettre à l'utilisateur de corriger cette pression lorsque cela devient nécessaire.

Selon un autre objet de l'invention, le dispositif est particulièrement facile d'accès, et se trouve à demeure sur la motocyclette, permettant son actionnement pendant la conduite, soit pour augmenter la pression, soit pour la diminuer. De préférence, le dispositif est rendu adaptable sur la quasi totalité des motocyclettes, sans nécessiter de pièces d'adaptation supplémentaires, et l'invention met pour cela à profit la standardisation des tubes de guidons de motocyclettes.

La forme du dispositif est particulièrement étudiée pour que celui-ci soit facilement logeable sur le guidon de la motocyclette, malgré la présence d'autres dispositifs de contrôle tels que le compteur de vitesse ou la présence d'autres éléments de construction tels que les écrous de fixation du guidon sur la fourche.

Selon un mode de réalisation préféré, le dispositif permet en outre d'éviter l'apparition de dépressions à l'intérieur de la suspension, dépressions qui pourraient contrarier le bon fonctionnement de la suspension.

Pour atteindre ces objets ainsi que d'autres, le dispositif de réglage de pression d'air selon l'invention est destiné à s'adapter sur une fourche de motocyclette à deux tubes téléscopiques munis de ressorts de suspension mécanique, de moyens amortisseurs et de chambres de compression contenant de l'air. Le dispositif comprend :
- un corps creux destiné à être fixé sur la motocyclette en une position accessible par l'utilisateur,
- une canalisation de passage d'air entre l'intérieur du corps et l'atmosphère intérieure des chambres de compression,
- une enceinte à paroi mécaniquement déformable, solidaire du corps et que l'utilisateur peut presser pour chasser l'air qu'elle contient,
- une canalisation d'admission d'air, reliant un orifice d'admission d'air et la cavité intérieure de l'enceinte à paroi mécaniquement déformable,
- un premier clapet antiretour, inséré dans la canalisation d'admission d'air pour autoriser l'entrée d'air dans l'enceinte et interdire sa sortie,

- une canalisation intermédiaire, intérieure au corps, recueillant l'air sortant de l'enceinte à paroi mécaniquement déformable,
- un second clapet antiretour, inséré dans la canalisation intermédiaire entre une portion amont de canalisation intermédiaire et une portion aval de canalisation intermédiaire, pour autoriser le passage d'air sortant de l'enceinte à paroi mécaniquement déformable et interdire le passage d'air dans la direction inverse,
- un dispositif de décharge à clapet, actionnable par l'utilisateur, pour autoriser sélectivement le passage d'air depuis la partie aval de canalisation intermédiaire vers l'atmosphère extérieure,
- un manomètre, solidaire du corps, adapté pour mesurer la pression d'air dans la partie aval de canalisation intermédiaire. En outre, selon l'invention :
- les moyens de canalisation de passage d'air comprennent deux premières extrémités destinées à être connectées respectivement à l'un et l'autre des deux tubes téléscopiques de la fourche de motocyclette pour communiquer avec l'atmosphère intérieure de ladite fourche, et une seconde extrémité connectée à un orifice de sortie du corps,
- la canalisation intermédiaire est connectée directement à l'orifice de sortie du corps,
- le volume total de la canalisation de passage d'air et de la portion aval de canalisation intermédiaire est très inférieur au volume total des chambres de compression de la fourche.

Selon un mode de réalisation préféré, l'enceinte à paroi mécaniquement déformable comprend une portion de surface supérieure de corps délimitée par un pourtour fermé selon lequel est solidarisé de manière étanche le pourtour d'une membrane déformable. La membrane déformable comprend une paroi centrale d'appui rigide se raccordant selon son pourtour à une paroi latérale élastiquement déformable dont le bord inférieur forme le pourtour de la membrane déformable et est solidarisé à ladite portion de surface supérieure de corps, la paroi élastiquement déformable tendant à repousser la paroi centrale rigide à l'écart de la portion de surface supérieure de corps.

D'autres objets, caractéristiques et avantages de la présente invention ressortiront de la description suivante d'un mode de réalisation particulier, faite en relation avec les figures jointes, parmi lesquelles :
- la figure 1 est une vue de côté en coupe illustrant une structure traditionnelle de fourche de motocyclette ;
- la figure 2 est une vue de dessus du dispositif de la présente invention et de son raccordement aux fourches de motocyclette ;
- la figure 3 est une vue de dessus du dispositif de l'invention, illustrant ses formes extérieures ;

- la figure 4 est une vue de dessous du dispositif de l'invention ;
- la figure 5 est une vue de côté droit du dispositif de l'invention, avec les moyens d'adaptation sur un guidon ;
- la figure 6 est une vue de face du dispositif de l'invention, avec ses moyens d'adaptation sur un guidon ;
- la figure 7 est une vue d'arrière en coupe transversale du dispositif de l'invention ;
- les figures 8 et 9 illustrent la déformation de la membrane déformable lors du fonctionnement ;
- la figure 10 est une vue en coupe longitudinale des clapets en position de gonflage ; et
- la figure 11 est une vue en coupe longitudinale des clapets en position de dégonflage.

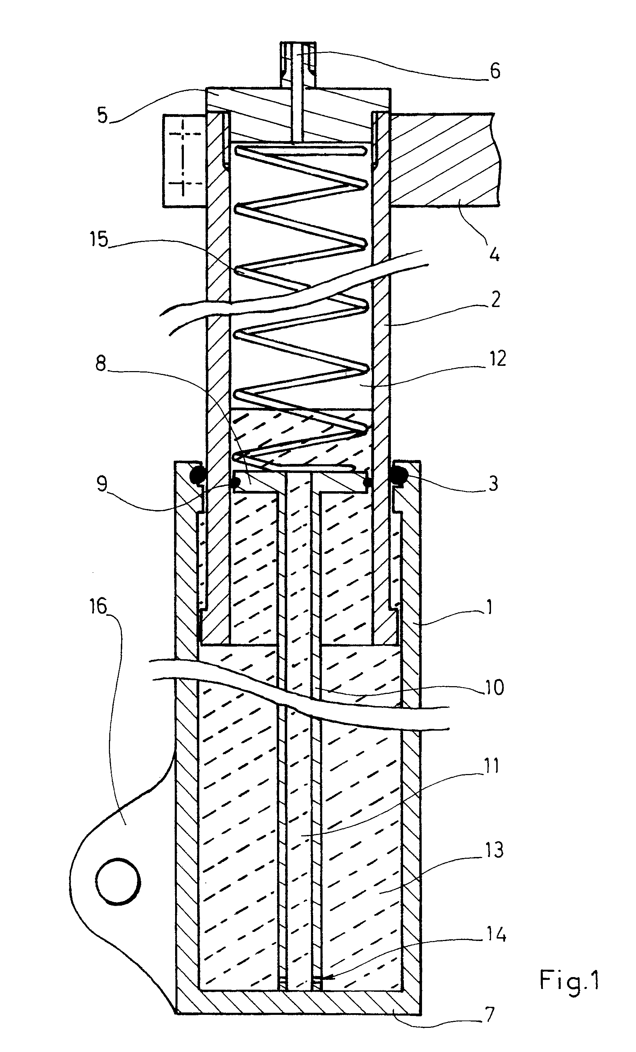

Une fourche traditionnelle de motocyclette comprend généralement deux tubes téléscopiques tels que le tube représenté sur la figure 1, chaque tube comportant un fourreau de fourche 1 dans lequel coulisse un tube plongeur 2 avec interposition d'un joint d'étanchéité 3. La fourche est fixée à la motocyclette par une pièce de fixation 4 solidaire de l'extrémité supérieure du tube plongeur 2. Le tube plongeur 2 est obturé à son extrémité supérieure par un bouchon 5 percé d'un orifice 6 de fourche. L'extrémité inférieure du fourreau de fourche 1 est fermée par une paroi inférieure étanche 7. Une tête de piston 8 est disposée à l'intérieur du tube plongeur 2, dans lequel elle coulisse avec interposition d'un joint d'étanchéité 9. La tête de piston 8 est solidarisée au fourreau de fourche 1 par une tige axiale 10 tubulaire dont la cavité centrale 11 communique d'une part avec la cavité supérieure 12 de fourche ou chambre de compression destinée à contenir de l'air, et d'autre part avec la cavité inférieure 13 de fourche par des orifices 14 de dimension appropriée éventuellement munis de clapets. Un ressort de compression 15 est en appui entre le bouchon 5 et la tête de piston 8, pour repousser le fourreau de fourche 1 à l'écart du tube plongeur 2. La roue de motocyclette est fixée au fourreau de fourche 1 par l'intermédiaire de pièces d'adaptation se fixant sur une proéminence 16 du fourreau de fourche 1. De l'huile est contenue dans la cavité inférieure 13 de fourche. Lors du fonctionnement de la suspension, l'huile circule dans la cavité centrale 11 de la tige 10 et passe alternativement de part et d'autre de la tête de piston 8 en produisant un effet d'amortissement. Le ressort 15 et l'air contenu dans la cavité supérieure de fourche 12 produisent ensemble la raideur de la suspension. En charge normale, la tête de piston 8 est au voisinage de la partie intermédiaire du tube plongeur 2, et la force de sustentation de la suspension est produite principalement par le ressort 15. Par contre, en surcharge, la tête du piston 8 se rapproche du bouchon 5 et comprime l'air contenu dans la cavité supérieure 12 de fourche. La force de sustentation produite par l'air augmente plus rapidement que la force produite par le ressort 15, en fin de compression, de sorte que le volume d'air agit comme une butée élastique empêchant le contact de la tête de piston 8 sur le bouchon 5, ou le contact de l'extrémité de tube plongeur 2 sur la paroi inférieure 7.

L'invention permet de contrôler et de commander en permanence la pression de l'air contenu dans la cavité supérieure de fourche 12, sans supprimer l'effet de butée élastique produit par l'air.

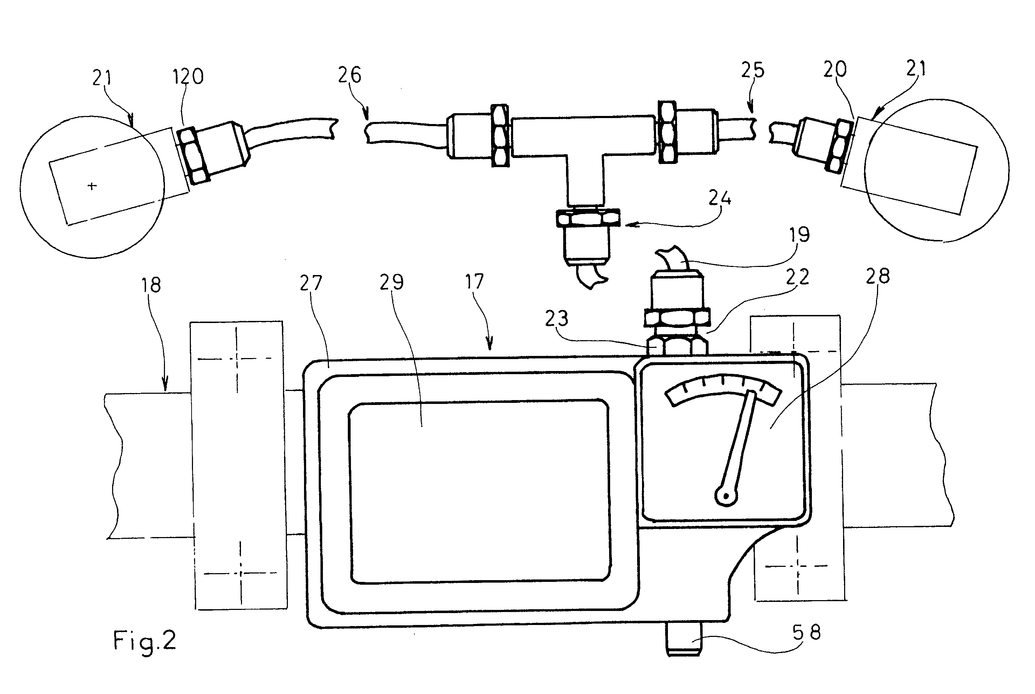

Pour cela, comme le représente la figure 2, l'invention comprend un dispositif de contrôle et de commande 17, adaptable sur une partie de motocyclette telle que le guidon 18, permettant d'injecter ou de retirer de l'air dans une canalisation de passage d'air 19. La canalisation 19 comprend deux premières extrémités 20 et 120 destinées à être connectées respectivement aux deux tubes d'une fourche de motocyclette 21 tels que le tube représenté sur la figure 1, pour communiquer avec l'atmosphère intérieure de la cavité supérieure 12 de fourche, et une seconde extrémité 22 connectée à un orifice de sortie 23 du dispositif 17 de commande et de contrôle de pression d'air.

Dans les fourches habituelles, les tubes comprennent un bouchon supérieur 5 muni d'un orifice 6 comportant une valve. Pour adapter le dispositif de l'invention, on doit retirer ladite valve, et raccorder l'une des premières extrémités 20 de canalisation sur l'orifice 6.

Dans le mode de réalisation représenté sur la figure 2, la canalisation 19 de passage d'air comprend une portion commune 24 raccordée à l'orifice de sortie 23 du dispositif 17 de commande et de contrôle de pression d'air, la portion commune 24 se divisant en deux branches 25 et 26 raccordées chacune respectivement à l'un des deux tubes téléscopiques d'une fourche de motocyclette. Cette disposition permet d'assurer l'équilibrage des pressions entre les deux tubes de fourche, et donc l'équilibrage des efforts mécaniques repris par chacun des deux tubes. La canalisation 19 de passage d'air doit avoir un volume intérieur très inférieur au volume total des cavités supérieures 12 de fourche, par exemple inférieur au dixième du volume total des cavités supérieures 12. A titre d'exemple, de bons résultats sont obtenus, sur une moto dont les fourches ont un volume intérieur de 400 cm3 environ, en prévoyant une canalisation 19 dont le volume est inférieur à 4 cm3.

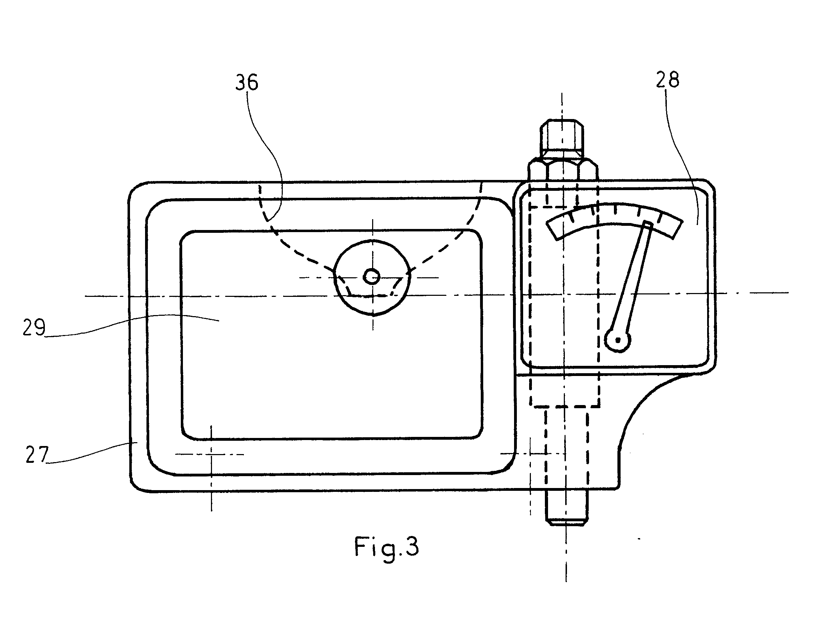

Comme le représentent les figures 2 à 6, le dispositif 17 de commande et de contrôle de pression selon l'invention comprend un corps 27 monobloc destiné à être fixé sur la motocyclette en une position accessible par l'utilisateur. Avantageusement, le corps 27 peut être fixé sur le guidon 18 de la motocyclette. Sur la face supérieure du dispositif 17, comme représenté sur les figures 2 et 3, on distingue deux parties principales, à savoir une portion droite relativement proéminente comportant un cadran 28 de manomètre, et une partie gauche sensiblement rectangulaire 29 constituée d'une paroi centrale rigide d'appui d'une membrane déformable formant pompe.

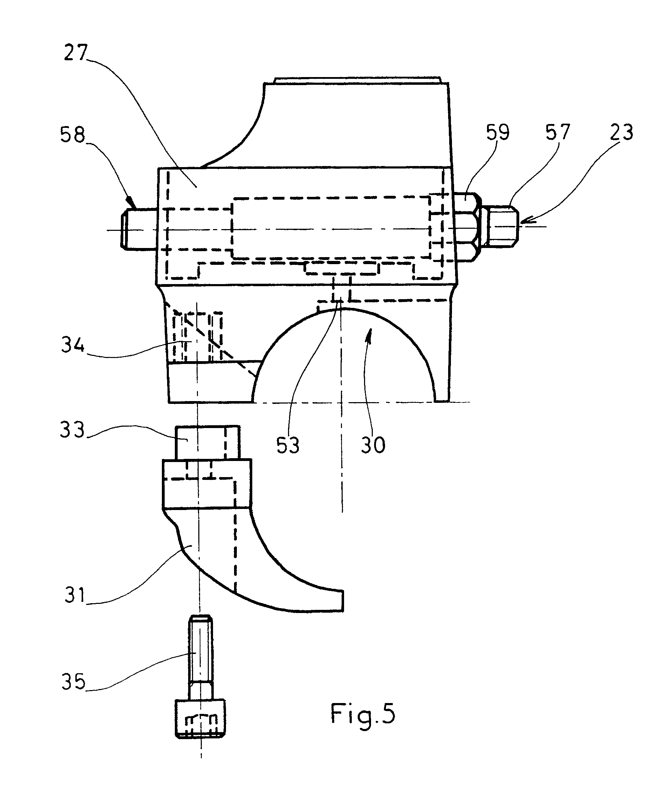

Pour son adaptation sur un guidon 18 de motocyclette, le corps 27 comprend une base 30 concave demi-cylindrique, destinée à s'engager sur un tube de guidon, et deux pattes amovibles de fixation 31 et 32 dont la forme en arc, telle que représentée sur la figure 5, suit la périphérie du tube de guidon. Les pattes de fixation 31 et 32 se raccordent sur la base du corps 27 par des formes engageantes complémentaires 33 et 34 évitant les oscillations des pattes de fixation 31 et 32 par rapport au corps 27, les pattes étant solidarisées au corps par des vis telles que la vis 35. Par serrage des vis telles que la vis 35, le tube de guidon inséré entre les pattes de fixation 31 et 32 et la base 30 du corps 27 est comprimé, de sorte que le corps 27 se trouve solidarisé au guidon 18.

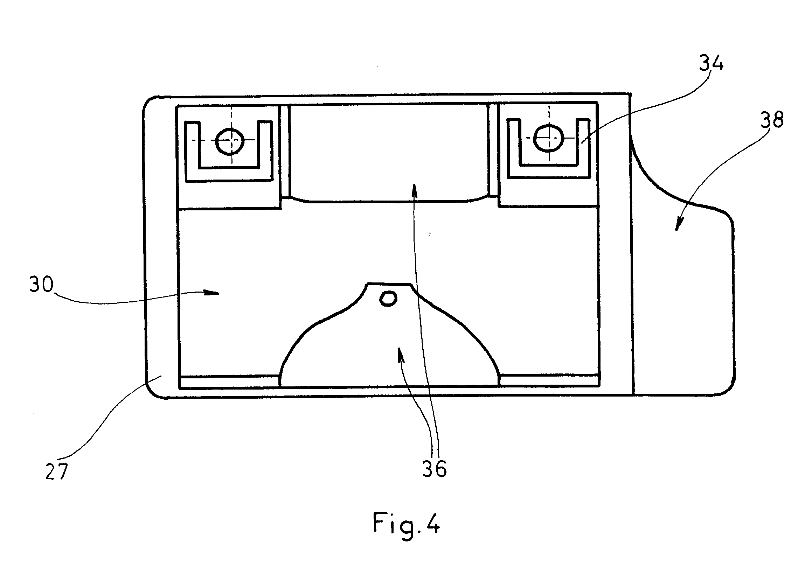

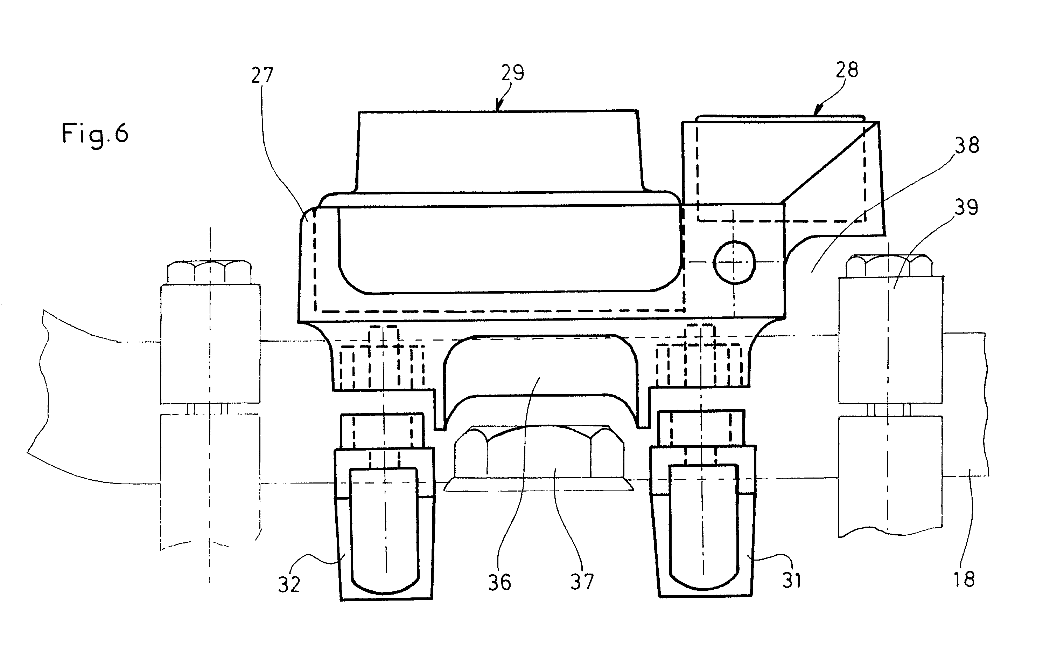

La base 30 du corps 27 comporte en outre des évidements appropriés permettant le passage d'autres éléments mécaniques que l'on rencontre habituellement sur les guidons de motocyclettes. Par exemple, la portion centrale de la base 30 comporte des évidements 36, représentés sur les figures 4 et 6, pour le passage et l'accès d'éléments tels que l'écrou 37 de serrage de fourche de la motocyclette. Egalement, la portion droite de la base 30 comporte un évidement 38 pour le passage de la fixation 39 de guidon.

Avec une telle structure, le dispositif 17 peut être fixé soit au centre de guidon par les deux pattes 31 et 32, soit à droite ou a gauche à côté des poignées, par une ou les deux pattes de fixation.

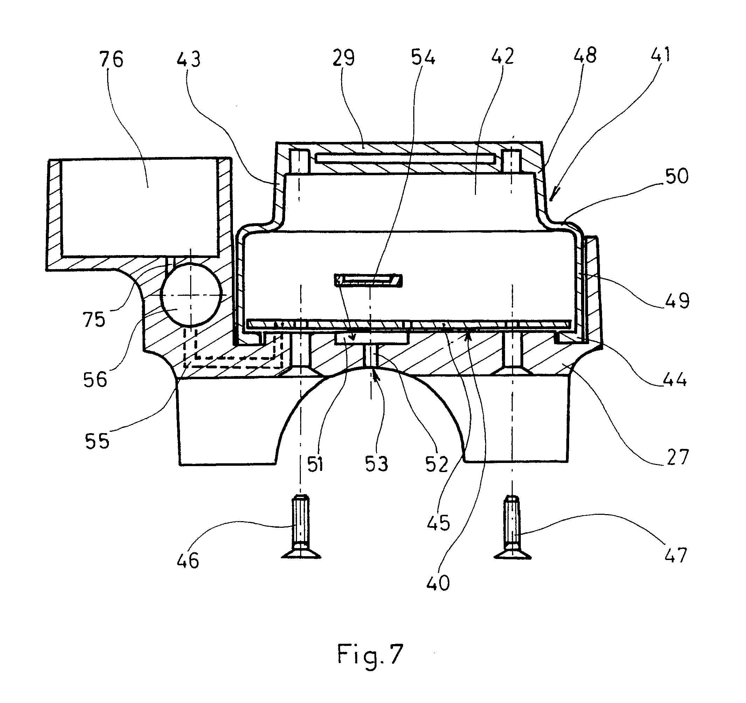

La structure interne du dispositif 17 de commande et de contrôle sera décrite ci-après notamment en relation avec les figures 7 à 11.

Le corps 27 comprend une portion 40 de sa surface supérieure conformée pour recevoir et retenir le pourtour d'une membrane déformable 41. L'ensemble constitué par la portion 40 de surface supérieure de corps 27 et la membrane déformable 41 forme une enceinte 42 étanche à paroi mécaniquement déformable.

Dans le mode de réalisation représenté, la membrane déformable 41 comprend la paroi centrale rigide d'appui 29, de forme sensiblement rectangulaire, se raccordant selon son pourtour à une paroi latérale 43 élastiquement déformable dont le bord inférieur 44 forme le pourtour de la membrane déformable 41. Le bord inférieur 44 est solidarisé au pourtour correspondant de la portion 40 de surface supérieure du corps 27. Par exemple, le bord inférieur 44 de la paroi latérale 43 comporte un retour vers l'intérieur, ledit bord 44 étant pincé entre le corps 27 et une plaque rigide 45 de fixation elle-même solidarisée au corps 27 par des vis 46 et 47. L'élasticité de la paroi latérale 43 tend à repousser la paroi centrale rigide 29 à l'écart de la portion 40 de surface supérieure du corps 27.

La membrane déformable 41 est réalisée en élastomère moulé, et comprend avantageusement une plaque métallique encastrée sous sa face supérieure et conférant la rigidité requise de la paroi centrale d'appui 29.

De préférence, la paroi latérale 43 élastiquement déformable comporte une première partie 48 ou partie supérieure, adjacente à la paroi centrale rigide 29, et une seconde partie 49 ou partie inférieure, adjacente à la surface 40 supérieure du corps 27. La première partie 48 de paroi latérale forme un contour plus petit que la seconde partie 49 de paroi latérale. Les deux parties 48 et 49 se raccordent l'une à l'autre par un décrochement périphérique 50 formant une zone de déformation préférentielle régulièrement répartie selon le pourtour de l'enceinte 42.

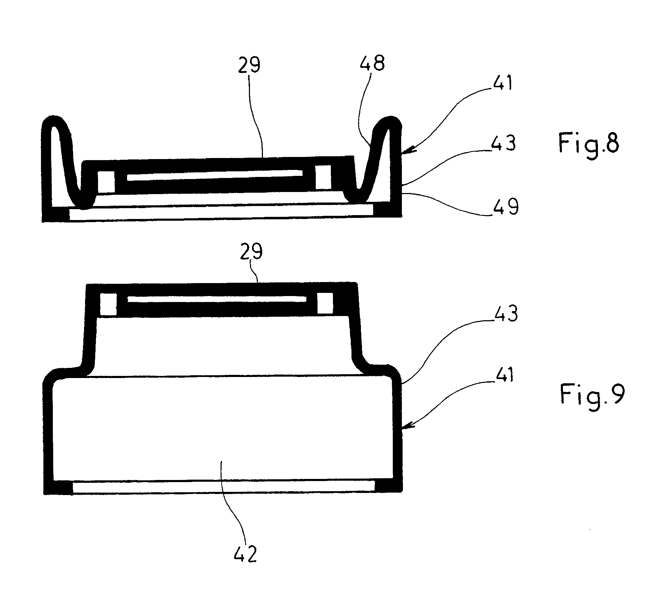

Les figures 8 et 9 illustrent la déformation de la membrane 41 lors du fonctionnement, lorsque l'on veut introduire une quantité d'air supplémentaire dans la suspension de motocyclette pour augmenter sa pression : sur la figure 9, la membrane 41 est représentée au repos, l'enceinte 42 présentant alors le volume maximum. Par pression manuelle sur la surface supérieure de la paroi centrale d'appui rigide 29, on rapproche ladite paroi centrale d'appui 29 de la base de l'enceinte 42, diminuant le volume de l'enceinte et chassant l'air qu'elle contient par les canalisations appropriées qui seront décrites ci-après. Lors de cet enfoncement, la paroi latérale 43 se déforme de la façon représentée sur la figure 8, la seconde partie 49 restant sensiblement sans changement ou s'écartant légèrement vers l'extérieur, la première partie 48 se repliant en 5. Lorsque l'on relâche la paroi centrale d'appui rigide 29, l'élasticité de la paroi latérale 43 est suffisante, en relation avec la forme particulière que prend la paroi sur la figure 8, pour repousser la paroi centrale d'appui rigide 29 vers le haut et reprendre sa position d'origine représentée sur la figure 9. Cette disposition permet d'assurer une élasticité suffisante de la membrane déformable 41 sans intervention de ressort de rappel.

Comme le représente la figure 7, un évidement 51 est prévu dans la portion 40 de surface supérieure du corps 27, prolongé vers le bas par une canalisation d'admission d'air 52, ladite canalisation 52 permettant de relier un orifice d'admission d'air 53 et l'atmosphère intérieure de l'enceinte 42 à membrane déformable 41. Un premier clapet antiretour 54 est inséré dans la canalisation d'admission d'air 52 pour autoriser l'entrée d'air et interdire sa sortie. Dans le mode de réalisation représenté, le clapet 54 est formé d'une plaque insérée dans le logement 51 et pouvant librement se déplacer dans ce logement pour admettre deux positions : en position d'obturation, la plaque est appliquée contre l'orifice interne de la canalisation 52, interdisant le passage d'air depuis l'enceinte 42 vers l'extérieur en position d'ouverture, la plaque est décollée du fond du logement 51 et permet l'introduction d'air depuis la canalisation 52 vers l'enceinte 42. Ladite plaque est maintenue par la plaque rigide 45, elle-même percée de trous pour le passage d'air entre l'enceinte 42 et le logement 51.

Une canalisation intermédiaire, intérieure au corps 27, relie directement la cavité intérieure de l'enceinte 42 à l'orifice de sortie 23. La canalisation intermédiaire comprend un canal 55, ménagé dans le corps 27, reliant la cavité intérieure de l'enceinte 42 à un logement tubulaire 56 ménagé dans le corps 27.

Le logement tubulaire 56 du corps 27 reçoit, à sa première extrémité, un embout 57 formant l'orifice de sortie 23 du corps 27. La seconde extrémité du logement tubulaire 56 est obturée sélectivement par un clapet de décharge 58. L'embout 57 comporte un filetage permettant le raccord des canalisations 19. L'embout peut être inséré en force dans le logement tubulaire 56. On peut avantageusement utiliser un embout 57 métallique, s'insérant dans un corps 27 en matière plastique. Une forme en six pans 59 peut être donnée à une portion de l'embout 57 pour empêcher la rotation de l'embout dans le logement tubulaire 56. Le logement tubulaire 56 contient en outre un second clapet antiretour 60.

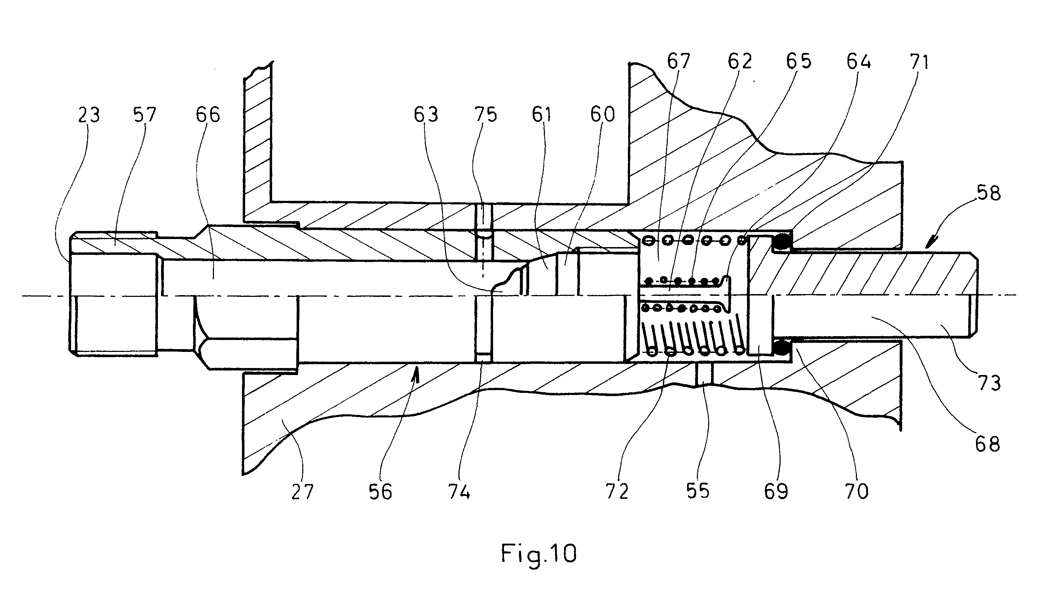

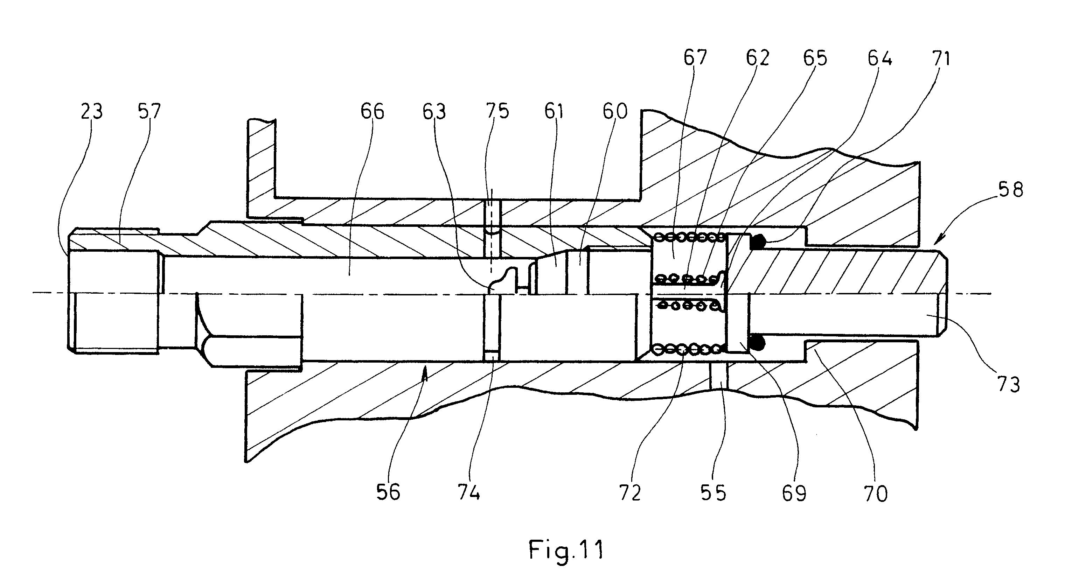

Les figures 10 et 11 représentent en coupe longitudinale un mode de réalisation du logement tubulaire 56 et des organes fonctionnels qu'il contient. L'embout 57 comporte une portion dépassante hors du logement 56, et une portion interne insérée dans le logement 56, l'ensemble de l'embout 57 étant tubulaire et comportant un alésage axial 66 formant la portion aval de canalisation intermédiaire. Cette portion aval 66 de canalisation intermédiaire doit également avoir un volume intérieur très inférieur au volume total des cavités supérieures 12 de fourche, par exemple un volume intérieur inférieur au dixième du volume total des cavités supérieures 12. L'extrémité interne de l'embout 57 reçoit, par vissage, un second clapet antiretour 60, constitué d'un corps de clapet 61 muni d'un alésage axial dans lequel coulisse une tige de guidage 62. Une première extrémité de la tige de guidage 62 comporte une tête d'obturation 63, la seconde extrémité de la tige de guidage 62 comportant une tête de manoeuvre 64. Un ressort de compression 65 est inséré entre la tête de manoeuvre 64 et le corps 61 de clapet, pour solliciter la tige 62 et sa tête d'obturation 63, et tendre à plaquer la tête d'obturation 63 contre la face d'extrémité du corps 61. En position de plaquage, la tête d'obturation 63 obture l'alésage axial du corps 61 de clapet 60, et interdit le passage d'air depuis l'alésage axial 66 de l'embout 57 vers la partie intermédiaire 67 de logement située entre le second clapet antiretour 60 et le clapet de décharge 58.

Le canal 55 débouche dans la partie intermédiaire 67 du logement 56, comme le représentent les figures. Le clapet de décharge 58 fonctionne également comme un clapet antiretour, et comprend un piston 68 monté à coulissement axial dans le logement 56 du corps 27, et comporte une partie annulaire 69 d'obturation venant en appui contre un épaulement correspondant 70 du corps avec interposition d'un joint d'étanchéité 71. Un ressort de compression 72 repousse la partie annulaire 69 contre l'épaulement 70. Une tige 73 dépasse hors du logement 56, et son extrémité est accessible par l'utilisateur. Par pression axiale sur la tige 73, l'utilisateur peut déplacer le piston 68 à l'encontre de l'effort exercé par le ressort 72, et écarter alors la partie annulaire 69 de l'épaulement 70. En poursuivant la poussée de la tige 73, le piston 68 vient en appui contre la tête de manoeuvre 64 de la tige 62 du second clapet antiretour 60, et repousse progressivement la tige 62 pour obtenir l'ouverture du second clapet antiretour 60. Dans cette position, l'air sous pression contenu dans l'alésage 66 s'échappe à travers le second clapet antiretour 60 et le clapet de décharge 58 vers l'atmosphère extérieure, autorisant ainsi le dégonflage de la suspension de motocyclette.

On choisit donc la longueur de la tige 62 de telle façon que, lorsque le clapet de décharge 58 est en position d'obturation, le second clapet antiretour 60 fonctionne librement par déplacement axial de la tige 62 et de la tête d'obturation 63 et, lorsque le clapet de décharge 58 est actionné en position de décharge, 'il repousse la tige axiale 62 et force le second clapet antiretour 60 en position d'ouverture.

Lors d'une dépression éventuelle à l'intérieur de la fourche, par rapport à l'atmosphère extérieure, le clapet de décharge 58 fonctionne en clapet antiretour dans le sens passant de l'extérieur vers l'intérieur, et se trouve en série avec le second clapet antiretour également à l'état passant. Il en résulte que la dépression éventuelle est aussitôt équilibrée et supprimée par une entrée d'air, sans intervention de l'utilisateur.

La partie intermédiaire de l'alésage 66, en aval du second clapet antiretour 60, comporte un perçage radial se raccordant à une gorge annulaire 74 communiquant elle-même par un canal 75 avec l'enceinte intérieure 76 du manomètre 28. Ainsi, le manomètre mesure en permanence la pression d'air dans l'alésage 66, qui est la pression d'air dans la fourche de suspension.

Pour augmenter la pression d'air dans la suspension, on applique manuellement des pressions successives sur la face supérieure rigide 29. Lorsque la pression d'air contenu dans l'enceinte 42 est supérieure à la pression atmosphérique, le premier clapet antiretour 54 est obturé, et l'air contenu dans l'enceinte 42 s'échappe par le canal jusque dans la partie intermédiaire 67, puis traverse le second clapet antiretour 60 et pénètre dans l'alésage 66, dans la canalisation 19 et dans la suspension. En relâchant la surface supérieure rigide 29, le second clapet antiretour 60 s'obture, le premier clapet antiretour 54 se met en position ouverte et permet l'admission d'air depuis l'orifice d'entrée 53 jusque dans l'enceinte 42. De préférence, l'orifice d'entrée 53 ou d'admission d'air est disposé dans la partie centrale concave de la base 30 du corps, partie destinée à être en regard du tube de guidon 18. Un mince passage d'air est ménagé entre le tube de guidon 18 et la base 30 du corps. On évite ainsi les admissions de poussière ou d'eau, et on effectue un filtrage de l'air introduit dans l'enceinte 42.

La présente invention n'est pas limitée aux modes de réalisation qui ont été explicitement décrits, mais elle en inclut les diverses variantes et généralisations contenues dans le domaine des revendications ci-après.

## Revendications

1 - Dispositif (17) de réglage de pression d'air pour fourche de motocyclette à deux tubes téléscopiques munis de ressorts (15) de suspension mécanique, de moyens amortisseurs (8) et de chambres de compression (12) contenant de l'air, le dispositif comprenant :
- un corps (27) creux, destiné à être fixé sur la motocyclette en une position accessible par l'utilisateur,
- une canalisation (19) de passage d'air mettant en communication l'intérieur du corps (27) avec l'atmosphère intérieure des chambres de compression (12),
- une enceinte (42) à paroi mécaniquement déformable, solidaire du corps (27) et que l'utilisateur peut presser pour chasser l'air qu'elle contient,
- une canalisation d'admission d'air (52), reliant un orifice d'admission d'air (53) et la cavité intérieure de l'enceinte (42) à paroi mécaniquement déformable,
- un premier clapet antiretour (54), inséré dans la canalisation d'admission d'air (53) pour autoriser l'entrée d'air dans l'enceinte (42) et interdire sa sortie,
- une canalisation intermédiaire (55, 67, 66), intérieure au corps (27), recueillant l'air sortant de l'enceinte (42) à paroi mécaniquement déformable, pour l'envoyer dans la canalisation (19) de passage d'air,
- un second clapet antiretour (60), inséré dans la canalisation intermédiaire entre une portion amont (55, 67) de canalisation intermédiaire et une portion aval (66) de canalisation intermédiaire, pour autoriser le passage d'air sortant de l'enceinte (42) à paroi mécaniquement déformable et interdire le passage d'air dans la direction inverse,
- un dispositif de décharge à clapet (58), actionnable par l'utilisateur, pour autoriser sélectivement le passage d'air depuis la partie aval (66) de canalisation intermédiaire vers l'atmosphère extérieure,
- un manomètre (28), solidaire du corps (27), adapté pour mesurer la pression d'air dans la partie aval (66) de canalisation intermédiaire, caractérisé en ce que :
- la canalisation (19) de passage d'air comprend deux premières extrémités (20, 120) destinées à être connectées respectivement à l'un et l'autre des deux tubes téléscopiques de la fourche (21) de motocyclette pour communiquer avec l'atmosphère intérieure de ladite fourche, et une seconde extrémité (22) connectée à un orifice de sortie (23) du corps (27),
- la canalisation intermédiaire (55, 67, 66) est connectée directement à l'orifice de sortie (23) du corps (27),
- le volume total de la canalisation (19) de passage d'air et de la portion aval (66) de canalisation intermédiaire est très inférieur au volume total des chambres de compression de la fourche.

2 - Dispositif selon la revendication 1, caractérisé en ce que l'enceinte (42) à paroi mécaniquement déformable comprend une portion (40) de surface supérieure de corps (27) délimitée par un pourtour fermé selon lequel est solidarisé de manière étanche le pourtour d'une membrane déformable (41).

3 - Dispositif selon la revendication 2, caractérisé en ce que la membrane déformable (41) comprend une paroi centrale d'appui rigide (29) se raccordant selon son pourtour à une paroi latérale (43) élastiquement déformable dont le bord inférieur (44) forme le pourtour de la membrane déformable (41) et est solidarisé à ladite portion (40) de surface supérieure de corps, la paroi élastiquement déformable (41) tendant à repousser la paroi centrale rigide (29) à l'écart de la portion (40) de surface supérieure de corps.

4 - Dispositif selon la revendication 3, caractérisé en ce que la paroi latérale élastiquement déformable (43) comporte une première partie (48) adjacente à la paroi centrale rigide (29), et une seconde partie (49) adjacente à la portion (40) de surface supérieure de corps, ladite première partie (48) formant un contour plus petit que ladite seconde partie (49) et se raccordant à celle-ci par un décrochement périphérique (50) formant une zone de déformation préférentielle régulièrement repartie selon le pourtour de l'enceinte (42).

5 - Dispositif selon l'une quelconque des revendications 1 à 4, caractérisé en ce que :
- le corps (27) comprend un logement tubulaire (56) dont une première extrémité reçoit un embout (57) formant l'orifice de sortie (23) du corps et dont l'autre extrémité est obturée sélectivement par ledit clapet de décharge (58),
- ledit clapet de décharge (58) est monté à coulissement axial dans le logement tubulaire (56) et comporte une partie annulaire (69) venant porter contre un épaulement (70) correspondant du logement avec interposition d'un joint d'étanchéité (71), une tige (73) de clapet dépassant hors du logement tubulaire (56) pour être actionnée par l'utilisateur, un moyen élastique (72) sollicitant le clapet pour le ramener contre l'épaulement (70) correspondant,
- ledit second clapet antiretour (60) est logé dans le logement tubulaire (56) en une position intermédiaire entre l'orifice de sortie (23) et ledit clapet de décharge (58),
- un canal (55) permet le passage d'air entre l'enceinte (42) à paroi mécaniquement déformable et la partie intermédiaire (67) de logement tubulaire (56) située entre le second clapet antiretour (60) et le clapet de décharge (58),
- le second clapet antiretour (60) comprend une tête d'obturation (63) solidaire d'une tige de guidage (62) coulissant axialement dans un alésage d'un corps de clapet (61), la tige (62) et la tête (63) étant sollicitées par un ressort (65) tendant à plaquer la tête d'obturation (63) contre un siège correspondant du corps (61) pour interdire le passage d'air, la tige (62) se développpant en direction du clapet de décharge (58) et ayant une longueur telle que, lorsque le clapet de décharge est en position d'obturation, le second clapet antiretour (60) fonctionne librement par déplacement axial de la tige (62) et de la tête d'obturation (63) et, lorsque le clapet de décharge (58) est actionné dans sa position de décharge, il repousse la tige axiale (62) et force le second clapet antiretour (60) en position d'ouverture.

6 - Dispositif selon l'une quelconque des revendications 1 à 5, caractérisé en ce que la canalisation (19) de passage d'air comprend une portion commune (24) raccordée à l'orifice de sortie (23) du corps (27) et se divisant en deux branches (25, 26) raccordées chacune respectivement à l'un des deux tubes d'une fourche (21) de motocyclette.

7 - Dispositif selon l'une quelconque des revendications 1 à 6, caractérisé en ce que le corps (27) comprend des moyens de fixation (30, 31, 32, 35) à un guidon de motocyclette.

8 - Dispositif selon la revendication 7, caractérisé en ce que le corps (27) comprend une base (30) concave demi-cylindrique destinée à s'engager sur un tube de guidon (18), et deux pattes (31, 32) amovibles de fixation dont la forme en arc suit la périphérie du guidon (18), les pattes (31, 32) se raccordant au corps (27) par des moyens de serrage (35).

9 - Dispositif selon la revendication 8, caractérisé en ce que l'orifice d'admission d'air (53) est disposé dans la partie centrale de la base (30) concave demi-cylindrique du corps, de sorte que l'air doit s'infilter entre le guidon (18) et le corps (27) et se trouve ainsi filtré.

10 - Motocyclette dont les fourches de suspension comprennent deux tubes téléscopiques comportant chacun un fourreau de fourche (1) muni d'un piston central (8) et dans lequel coulisse un tube plongeur (2), le piston (8) étant solidarisé au fourreau (1) de fourche par une tige axiale (10) tubulaire, des passages calibrés étant prévus pour autoriser une circulation d'huile de part et d'autre du piston (8), un ressort (15) repoussant le tube plongeur (2) à l'écart du piston (8) et du fourreau (1) de fourche, un volume d'air étant prévu dans une cavite supérieure (12) de tube de fourche,
caractérisé en ce qu'elle comprend un dispositif (17) de réglage et de contrôle de pression d'air selon l'une quelconque des revendications 1 à 9, ledit dispositif (17) étant connecté à la cavité supérieure (12) de tube de fourche pour régler et contrôler la pression d'air dans ladite cavité (12).

Fig.1

Fig.2

EP 0 424 284 A1

Fig.3

Fig.4

EP 0 424 284 A1

Fig.5

Fig.6

EP 0 424 284 A1

Fig.7

Fig.8

Fig.9

Fig.10

EP 0 424 284 A1

Fig.11

**Office européen
des brevets**

**RAPPORT DE RECHERCHE
EUROPEENNE**

Numéro de la demande

**EP 90 42 0439**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D,Y,D- ,A, | US-A-4 153 266  (J. J. UHLS) <br> * le document en entier * <br> – – – | 1,7,10,6,8 | B 62 K <br> 25/08 |
| Y,D | EP-A-0 173 020  (S. W. SIMONS) <br> * abrégé; figures * <br> – – – – – | 10 | |

| | DOMAINES TECHNIQUES RECHERCHES (Int. Cl.5) |
|---|---|
| | B 62 K |

Le présent rapport de recherche a été établi pour toutes les revendications

| Lieu de la recherche | Date d'achèvement de la recherche | Examinateur |
|---|---|---|
| La Haye | 16 janvier 91 | FRANKS B.G. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons

               

& : membre de la même famille, document
correspondant